# EUROPEAN PATENT APPLICATION

(11) **EP 4 102 380 A1**
(43) Date of publication of application: **14.12.2022**
(21) Application number: 22305815.7
(22) Date of filing: 03.06.2022
(51) Int. Cl.: G06F 16/93, G06F 16/903, G06F 16/901

(54) **DATABASE OFFLOADING UTILIZING A LOCATER INDEX**

(30) Priority: 08.06.2021 US 202117341655
(71) Applicant: Amadeus S.A.S., 06410 Biot (FR)
(72) Inventor: OLIVA, Clement, 06560 Valbonne (FR); DOLLE, Laurent, 06370 Mouans Sartoux (FR); KALINA, Piotr, 06150 Cannes (FR)
(74) Representative: Samson & Partner Patentanwälte mbB

(57) **Abstract**

Methods, systems, and computer program products for implementing a database offloading process via a locater index. A search request for a document is received at a nearline ("live") data storage server. A location of the document is determined by accessing a locater index that includes a locater table that indicates locations of documents in a plurality of database systems that includes an archive data storage system and a local data storage system. Determine that the location of the document is archived as an object in an object store in the archive data storage system. The document is obtained by providing instructions to the archive data storage system to locate the object in the object store based on a header identification. The document is provided to the requestor.

## Description

### TECHNICAL FIELD

The present invention generally relates to computers and computer software, and more specifically, to methods, systems, and computer program products for implementing a database offloading process via a locater index.

### BACKGROUND

In database-oriented services, fulfilling service requests may include performing one or more requests to databases storing information related to the service that are stored in near-line storage or purged in a long term archive based on certain conditions (e.g., date, privacy storage rules, etc.). In these types of services, database performance may influence the availability and throughput of the overall service's ability to process requests. If databases are healthy, the service will likely remain available with sufficient throughput. However, if a database is overloaded with too many concurrent database operations, database performance and throughput may decline when accessing the archiving database because, by design, an archiving database is "cheaper" than a live database, at the cost of reduced throughput.

In some conventional systems, one approach to promote the performance of database-oriented services to access archived data and mitigate the impact of the engineering tradeoff for an archiving database is to utilize an indexing table. However, even in these cases, the indexing table is not customizable for instances that require complex and stringent archiving rules. For example, in the airline industry, different countries require different archiving and purging standards, thus the current indexing applications cannot apply the same algorithms for each scenario (e.g., date requirements, personal data removal per EU GDPR, and the like). Thus, an archiving database may be slower by design because its value is cheaper cost per giga-byte, rather than pure velocity, ultimately creating a backlog in the requests to be processed by the relying service, but the efficiency of an archiving database can be improved via seamless user-friendly access to a customizable indexing table.

### SUMMARY

In embodiments of the invention, a device includes a non-transitory computer-readable storage medium and one or more processors coupled to the non-transitory computer-readable storage medium. The non-transitory computer-readable storage medium includes program instructions that, when executed by the one or more processors, cause the device to perform operations. The operations include receive, at a nearline data storage server via a gateway server, a search request for a document from a requestor. The operations further include access, based on the request, a locater index to determine a location of the document, wherein the locater index comprises a locater table that indicates locations of documents in a database system that includes an archive data storage system and a local data storage system. The operations further include determine that the location of the document is archived as an object in an object store in the archive data storage system. The operations further include obtain the document by providing commands to the archive data storage system to locate the object in the object store based on a header identification. The operations further include provide the document to the requestor.

In other embodiments of the invention, a method for implementing a database offloading process via a locater index includes receiving, at a nearline data storage server via a gateway server, a search request for a document from a requestor. The method further includes accessing, based on the request, a locater index to determine a location of the document. The locater index includes a locater table that indicates locations of documents in a database system that includes an archive data storage system and a local data storage system. The method further includes determining that the location of the document is archived as an object in an object store in the archive data storage system. The method further includes obtaining the document by providing commands to the archive data storage system to locate the object in the object store based on a header identification. The method further includes providing the document to the requestor.

In other embodiments of the invention, a non-transitory computer storage medium includes a computer program that includes a plurality of program instructions that when executed by one or more processors cause the one or more processors to perform operations. The operations include receive, at a nearline data storage server via a gateway server, a search request for a document from a requestor. The operations further include access, based on the request, a locater index to determine a location of the document, wherein the locater index comprises a locater table that indicates locations of documents in a database system that includes an archive data storage system and a local data storage system. The operations further include determine that the location of the document is archived as an object in an object store in the archive data storage system. The operations further include obtain the document by providing commands to the archive data storage system to locate the object in the object store based on a header identification. The operations further include provide the document to the requestor.

These and other embodiments can each optionally include one or more of the following features.

In some embodiments of the invention, the plurality of program instructions further cause the computing apparatus to provide instructions to receive, at the nearline data storage server, an additional search request for another document from the requestor, access, based on the additional search request, the locater index to determine a location of the other document, determine that the location of the other document is in the local data storage system, obtain the document by providing commands to the local data storage system to locate the other document, and provide the other document to the requestor.

In some embodiments of the invention, the plurality of program instructions further cause the computing apparatus to provide instructions to move the document from the archive data storage system to the local data storage system.

In some embodiments of the invention, the plurality of program instructions further cause the computing apparatus to store the document in the locater index.

In some embodiments of the invention, the plurality of program instructions further cause the computing apparatus to determine that the document includes frequent data access patterns based on a frequency threshold, and store the document in the locater index based on the frequent data access patterns.

In some embodiments of the invention, the object store includes a plurality of documents that are aggregated and stored as an object data unit.

In some embodiments of the invention, the plurality of program instructions that cause the computing apparatus to provide the document include determine that the document includes one or more prior iterations, and provide each iteration with the document.

In some embodiments of the invention, the locater index includes a locater algorithm that accesses the locater table based on locater rules. In some embodiments of the invention, the locater rules are customized by the requestor.

In some embodiments of the invention, the local data storage system includes the locater index.

This summary is provided to introduce a selection of concepts in a simplified form that are further described below in the detailed description. This summary is not intended to identify key features or essential features of the claimed subject matter, nor is it intended to be used in isolation as an aid in determining the scope of the claimed subject matter.

### BRIEF DESCRIPTION OF DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
Figure 1 illustrates a distributed archiving database environment for implementing a database offloading process via a locater index based on a search request for a document, according to embodiments of the invention.
Figures 2A and 2B illustrate example routines in the form of sequence diagrams that may be performed by the distributed archiving database environment shown in FIG. 1, according to embodiments of the invention.
Figure 3 illustrates an example database offloading process via a locater index based on a search request for a document, according to embodiments of the invention.
Figure 4 illustrates an example database offloading process via a locater index for accessing a document from a near-line database, according to embodiments of the invention.
Figure 5 illustrates an example database offloading process via a locater index for accessing a document from an archived database, according to embodiments of the invention.
Figure 6 illustrates an example database offloading process via a locater index for purging documents from a near-line database, according to embodiments of the invention.
Figure 7 is a flowchart of an example process for data location based on a search request for a document, according to embodiments of the invention.
Figure 8 is a block diagram showing an example computer architecture for a computer capable of executing the software components described herein, according to embodiments described herein.

### DETAILED DESCRIPTION

Generally, systems, methods, devices, and techniques are provided for implementing a data offloading process locater index provides a fully automated process to keep track of an archived document, and delete it based on custom parameters. In particular, the data offloading process is tailored to the airline ticket search model.

In order to be able to enable user-friendly access to all archive and online data, embodiments of the invention are related to systems and methods for implementing a customizable indexing table that is communicatively coupled (e.g., attached) to the live (aka nearline) database and called every time a document (live or archived) has to be fetched. In particular, the customizable indexing table (also referred to herein as a "locater index") is tailored to the airline inventory data model. The locater index provides seamless data access that allows database size reduction, fast, accurate, and less expensive results for data access than current cache systems, and allows lifetime management of archived data. For example, the locater index is "seamless" to the end user because there is no need for a near line storage server to know whether a document is archived or not, as the redirection to the proper storage database is handled by the framework. The redirection also enables an "unarchive" feature, where a document is temporarily copied back in the live database for performance purposes. Additionally, the locater index provides faster access because the index is located at the near-line storage server (e.g., the "live" server), and the locater index can reuse the efficient "live database" technology. In some implementations, the locater index can store some of the data being accessed if it is determined that the particular document(s) include frequent data access patterns, there is no need to reach out to the actual storage whether it is stored in the live databased or archived, because reading the locater index is enough.

Database size reduction is based on offload data from one media type to another (cheaper), including deletion once the object is securely archived. For example, purging data from a near-line ("live") storage to an archive storage (e.g., an object store) via a purge process. The data access provides seamless access for the end user to documents independently of where they are stored: live or archived, read/write, read-only, etc. This includes the possibility of backand-forth copy between databases (e.g., live and archive).

Additionally, in some embodiments of the invention, regarding lifetime management, the locater index provides a fully automated process to keep track of an archived document, and delete it based on custom parameters. Different data archiving standards exist depending on the type of data being stored. For example, for the airline industry, different countries or regions require different archiving parameters. For example, the European Union (EU) requires the airline industry to store data in archive after four years, and purge the data from the archive after ten years. However, another region may require to purge the data after seven years. Moreover, with regards to privacy data, some storage requirements may require keeping only portions of the data for a particular time period such that personal data may be stored for only a portion of time for the archived data object. Thus, the locater index provides easier means for customization based on the type of data and archiving/purging rules that are associated with the archive database.

More specifically, embodiments of the invention may include a process that receives, at a near-line ("live") data storage server via a gateway server, a search request for a document (e.g., a ticket search request) from a requestor. For example, the requestor may be an airline agency, travel agency, metasearch engine, other GDS, or based on the location of the requestor; the request includes an access user identification and a reference date). The process accesses, based on the request, a locater index to determine a location of the document, wherein the locater index includes a locater table that indicates locations of documents in a plurality of database systems that includes an archive data storage system and a local data storage system (e.g., live database). The process determines that the location of the document is archived as an object (e.g., aggregated tickets and stored in specific buckets per vendor) in an object store in the archive data storage system (e.g., aggregated objects stored in an object store, each object including of a subset of a plurality of tickets (reference date/ID/data), one object per type, such as reference date, and each object stored in a bucket per airline, so each airline bucket would include objects for each day (e.g., 365 days per year). The process obtains the document (and all iterations associated with the ticket) by providing instructions to the archive data storage system to locate the object in the object store based on a header identification (e.g., the indexing table directs the server to access the object/bucket that contains the requested ticket via a header in the object store, and the object pointed may include a redirection table to enable the final target of the data placement in the object). The process then ("seamlessly") provides the document to the requestor.

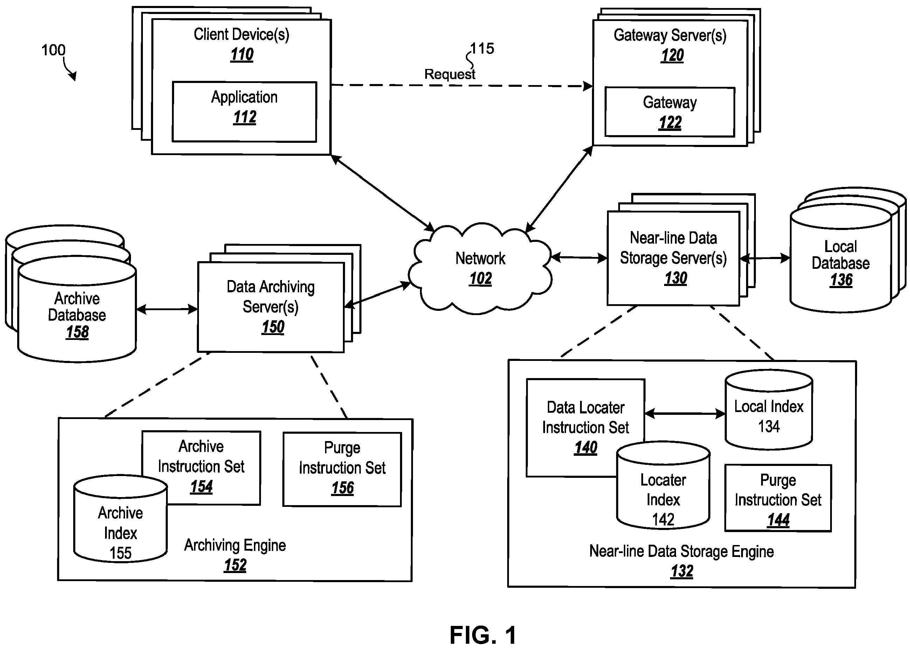

**Figure 1** is an example environment 100 of a distributed database environment for implementing a database offloading process via a locater index, according to embodiments of the invention. The example environment 100 includes one or more client device(s) 110, one or more gateway server(s) 120, one or more near-line data storage server(s) 130, and one or more data archiving server(s) 150, that communicate over a data communication network 102, e.g., a local area network (LAN), a wide area network (WAN), the Internet, a mobile network, or a combination thereof.

The one or more client device(s) 110 (e.g., a device used by a requestor, also referred to herein as client device 110) can include a desktop, a laptop, a server, or a mobile device, such as a smartphone, tablet computer, wearable device (e.g., smartwatch), in-car computing device, and/or other types of mobile devices. The client device 110 includes applications, such as the application 112, for managing a document request to/from the one or more near-line data storage server(s) 130 and/or the one or more data archiving server(s) 150 via the gateway server(s) 120. The client device 110 can include other applications. The client device 110 initiates a document request 115 (e.g., a travel booking request) by a requestor via application 112. The document request 115 may include availability search queries by requesting entities (such as clients, applications, browsers installed on user terminals, etc.) in the course of a search (e.g., airline booking search). The client device 110 may be utilized by a customer to review a reserved travel booking and provide and authenticate payment information for the reserved travel booking. Additionally, a requestor of a request 115 of a travel booking using the client device 110 may include an airline agency, travel agency, other dedicated global distribution systems (GDS), as for example airlines reservation systems which provide flight search applications for shopping business like flight booking, and the like.

The gateway 122 of the gateway server(s) 120 manages the location of the document request 115 received from application 112 from the one or more client devices 110. The management protocols of gateway server 120 may be based on a redundant load-balancing system by managing multiple clients (e.g., client device(s) 110) so that a document request 115 is handled by one of the one or more near-line data storage server(s) 130. For example, there may be multiple near-line data storage server(s) 130 that are able to service the document request 115, and the redundant load-balancing system of the gateway server(s) 120 is responsible for ensuring that the document request 115 is performed by one of the capable nearline data storage server(s) 130.

The one or more near-line data storage server(s) 130 (also referred to herein as near-line data storage server 130) manages document requests 115 received via the gateway 122 from the one or more client devices 110. The one or more near-line data storage server(s) 130 may be front end server(s) for managing, collecting, processing, and communicating document requests (e.g., travel booking requests, resource information, revenues management data, bookings data, etc.). Further, the one or more near-line data storage server(s) 130 may be front end server(s) for managing, collecting, processing, and communicating database offloading requests and offloading data via a purge process using a purge instruction set 144 from the local database 136 to the archive database 158.

In an exemplary implementation, the one or more near-line data storage server(s) 130 receive a search request (e.g., document request 115) from a client device 110 (e.g., via gateway 122) to locate and retrieve a document(s) that is either stored in the local database 136 (e.g., near-line storage or "live" database), stored in the archive database 158, or has been purged (e.g., removed from all databases). A near-line data storage server 130 includes a near-line data storage engine 132 to execute a data locater instruction set 140 that performs a database offloading protocol (e.g., a data locater protocol) according to processes described herein. The near-line data storage engine 132 includes a local index 134 associated with the local database 136 (e.g., "live database" technology).

The near-line data storage engine 132 further includes a locater index 142 that enables access to the "live" data stored in the local database 136 and all archive data stored in archive database 158. The locater index 142 is a customizable indexing table provides seamless data access that allows database size reduction, fast, accurate, and less expensive results for data access than current cache systems, and allows lifetime management of archived data. For example, the locater index 142 is "seamless" to the end user because there is no need for the near-line data storage server 130 to know whether a document is archived or not, as the redirection to the proper storage database is handled by the framework of the locater index 142. The redirection of the locater index 142 also enables an "unarchive" feature, where a document is temporarily copied back in the live local database 136 from the archive database 158 for performance purposes. For example, customized instructions may be provided via the locater index 142, to move all data after two years from the local database 136 and store in the archived storage or archive database 158. Thus, after that two-year date, the purge instruction set 144 will automatically remove those particular files from the "live" database (local database 136) that have been determined out of date and move them to the archived storage (archive database 158).

In some implementations, locater index 142 can store some of the data being accessed if it is determined that the particular document(s) include frequent data access patterns such that there is no need to reach out to the actual storage databases whether it is stored in the live local database 136 or archived in the archive database 158, because reading and accessing to data from the locater index 142 is enough. For example, if a particular document is accessed on a daily basis, that document (or data set) can be stored directly in the locater index 142. Alternatively, other user customized thresholds may be used to determine whether a document or particular data set can be stored directly in the locater index 142 (e.g., accessed at least a certain number of times per day, week, etc.).

The one or more data archiving server(s) 150 (also referred to herein as data archiving server 140) manages the archival of data in the archive database 158 via an archiving engine 152 using an archive instruction set 154 and an archive index 155. In an exemplary implementation, the one or more data archiving server(s) 150 receive an archive request (e.g., document request 115) from a near-line data storage server 130 to locate and retrieve a document(s) that is stored in the archive database 158 as referenced by the locater index 142. The one or more data archiving server(s) 150 may be front end server(s) for processing document requests from the near-line data storage server 130 via the locater index 142. Further, the one or more data archiving server(s) 150 may be front end server(s) for managing, collecting, processing, and communicating database offloading requests and offloading data (e.g., deleting/removing data) via a purge process using a purge instruction set 156 from the archive database 158. For example, customized instructions may be provided via the locater index 142, to remove all data after ten years or archived storage. Thus, after that ten-year date, the purge instruction set 156 will remove/delete those particular files that have been determined out of date.

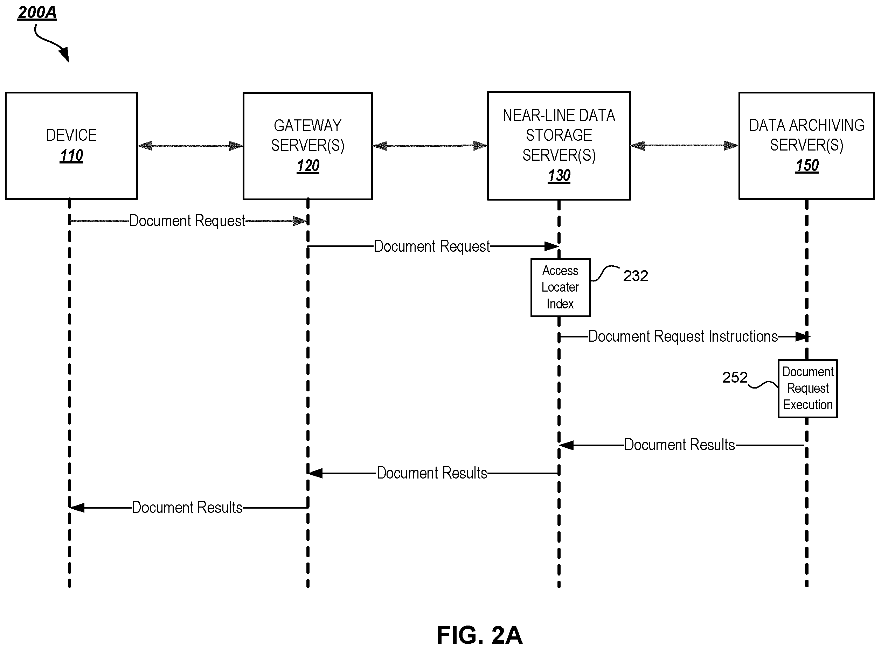

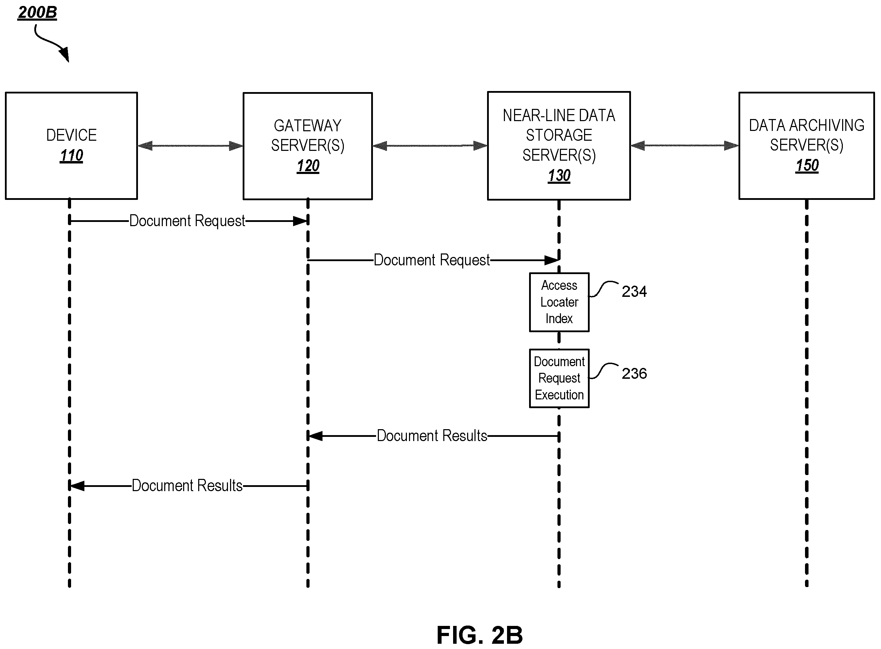

An example routine of implementing a database offloading protocol as illustrated in the environment of Figure 1 is further discussed herein with reference to sequence diagrams 200A and 200B of Figures 2A and 2B, respectively.

**Figure 2A** **and** **Figure 2B** illustrate example routines in the form of a sequence diagrams 200A, 200B, respectively, that may be performed by the distributed database environment shown in FIG. 1 as a procedure to facilitate a database offloading process via a locater index for a document search, according to embodiments of the invention. Figures 2A and 2B provide exemplary routines that may be performed by the client device 110, the gateway server(s) 120, the near-line data storage server(s) 130, and the data archiving server(s) 150 consistent with some embodiments of the invention to process a document search for a database offloading protocol via a locater index.

Sequence diagram 200A illustrates an example database offloading process where the document as determined by the near-line data storage engine 132 as indicated by the locater index 142 as archived and located in the archive database 158. Thus, sequence diagram 200A is initiated at a client device 110 via application 112 (e.g., a travel document request is entered at a consumer device). The travel document request is received by a gateway server 120. In response, the gateway server 120 communicates the document request to the near-line data storage server 130. The near-line data storage server 130, at block 232, accesses the locater index 142 to determine the storage location of the document being requested. The near-line data storage engine 132, using the data locater instruction set 140 determines the location of the document is in the archive database 158. The near-line data storage server 130 then communicates the document request instructions to the data archiving server(s) 150. The data archiving server(s) 150, at block 252, retrieves the requested document(s), and sends the requested document(s) to the device 110 via the near-line data storage server 130 and the gateway server(s) 120.

Sequence diagram 200B illustrates an example database offloading process where the document as determined by the near-line data storage engine 132 as indicated by the locater index 142 as being located in the local database 136 (e.g., "live" database), thus has not been archived. Thus, sequence diagram 200B is initiated at a client device 110 via application 112 (e.g., a travel document request is entered at a consumer device). The travel document request is received by a gateway server 120. In response, the gateway server 120 communicates the document request to the near-line data storage server 130. The near-line data storage server 130, at block 234, accesses the locater index 142 to determine the storage location of the document being requested. The near-line data storage engine 132, using the data locater instruction set 140 determines the location of the document is in the local database 136. The near-line data storage engine 132 of the near-line data storage server 130, at block 236, retrieves the requested document(s), and sends the requested document(s) to the device 110 via the gateway server(s) 120.

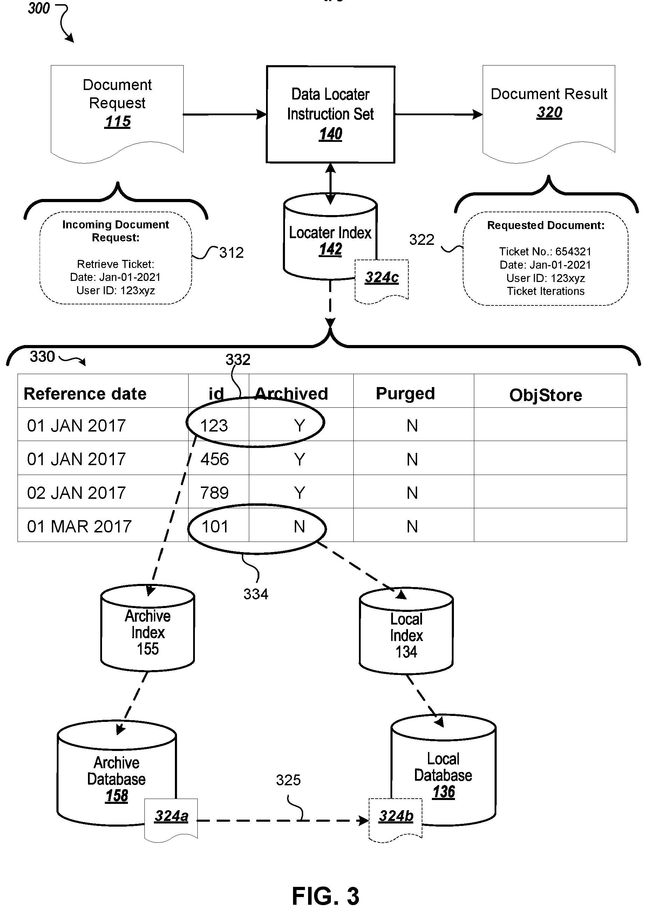

The actions of the near-line data storage server(s) 130 utilizing the data locater instruction set 140 to process a data locater protocol are further described herein with reference to the illustration in Figures 3-7.

**Figure 3** illustrates an example data locater process via a locater index based on a search request for a document, according to embodiments of the invention. In particular, Figure 3 illustrates an example environment 300 for a data locater implementation for determining a location of a document(s) for a document search request 115. The objective for the data locater instruction set 140 is to provide seamless data access whether the data is located in the near-line (e.g., local/live) database or an archived database. The data locater instruction set 140 allows database size reduction, fast, accurate, and less expensive results for data access than current cache systems, and allows lifetime management of archived data because there is no need for a near line storage server to know whether a document is archived or not, as the redirection to the proper storage database is handled by the framework of the locater index 142. For example, the data locater instruction set 140, stored on one or more near-line data storage server(s) 130, receives a document request 115 (e.g., from a client device 110). The document request 115 includes document information 312 (e.g., an identification, date, etc.) that is associated with a document(s) being searched.

The data locater instruction set 140 initiates a data locater protocol (e.g., block 232 of Figure 2A or block 234 of Figure 2B) to access a locater index 142 to search for the location of the requested document. The near-line data storage engine 132 then accesses the document and provides the request document as the document result 320 which includes the requested document information 322. For example, the document information 322 for the airline industry may include a ticket number, the travel date, the user ID, and may optionally include each iteration associated with that ticket (e.g., rebookings of the same ticket for the same traveler).

Figure 3 further illustrates an example locater table 330 of the locater index 142 (also referred to herein as indexing table 330) for the example document request 115. In particular, environment 300 illustrates three different potential locations of the requested document. For example, document 324a is located in the archive database 158, document 324b is located in the local database 136, and document 324c is stored in the locater index 142. For example, if the document request 115 was for the "01 JAN 2017" and "ID: 123" document, then the locater index 142 would search for that data, as illustrated by area 332 on the locater table 330, which states that the document has been archived, thus needs to be accessed in the archive database and searched via the archive index 155. In some implementations, the locater index 142 may indicate a location within the archive database 158, but the archive index 155 may be needed to determine a more precise location of the document within the archive database 158. Alternatively, if the document request 115 was for the "01 MAR 2017" and "ID: 101" document, then the locater index 142 would search for that data, as illustrated by area 334 on the locater table 330, which states that the document has not been archived, thus can be accessed in the local database and searched via the local index 134. In some implementations, the locater index 142 may indicate an exact location within the local database 136, but the local index 134 may be needed to determine a more precise location of the document within the local database 136.

Moreover, environment 300 further illustrates additional features for implementing the locater index 142 at feature 325. For example, once the document 324a is requested and accessed, the near-line data storage engine 132 may move (e.g., feature 325) the document 324a from the archive database 158 to the local database 136 since the document is now being requested. For example, moving the document to the live storage for quicker access. In some implementations, and depending on the customization of the locater index 142, if the document 324 has been accessed over a number of times during the day/week/month, etc., then the data locater protocols may store a copy of the requested document as document 324c at the locater index for even quicker access for the next request of document 324. Thus, there is no need to reach out to the actual storage whether it is stored in the live databased or archived, because reading the locater index 142 is enough.

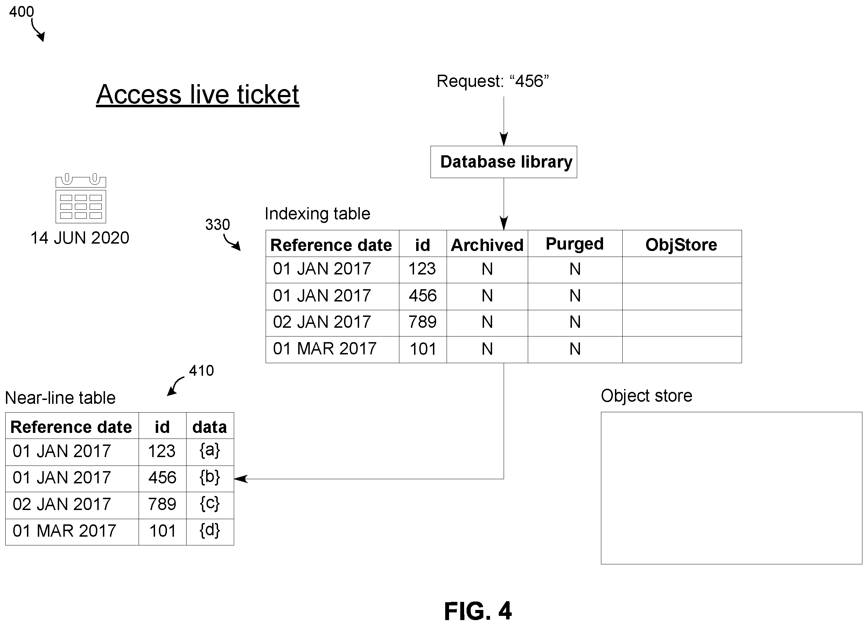

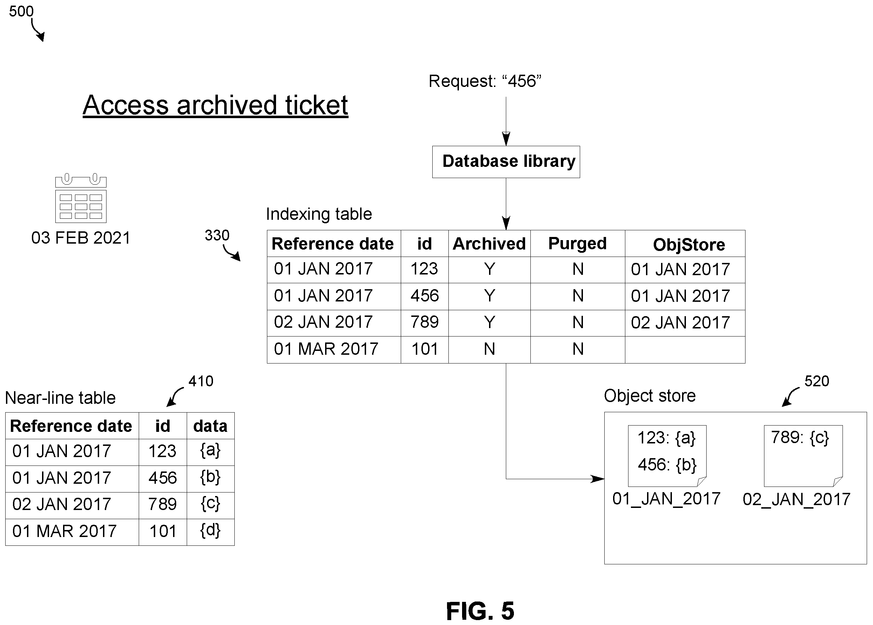

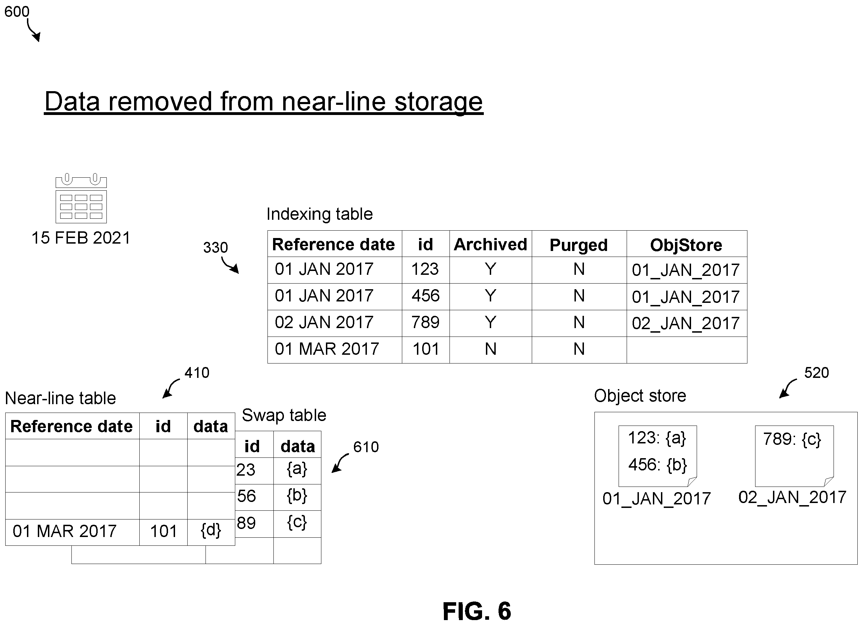

Figures 4-6 illustrate examples of a database offloading according to embodiments of the invention. Figures 4-6 collectively illustrate a system that implements the distributed archiving database environment shown in FIG. 1, where the customized archiving rules implemented archive data (e.g., airline tickets) after four years, as further illustrated in the examples of Figures 5 and 6.

**Figure 4** illustrates an example database offloading process via a locater index for accessing a document from a near-line database, according to embodiments of the invention. In particular, Figure 4 illustrates an example environment 400 for accessing a "live" document (e.g., a request for a ticket/document that has not been archived yet) from near-line storage system (e.g., local database 136). For example, a document request (e.g., document request 115) is initiated for document ID: "456" on June 14, 2020 (e.g., less than four years of the reference date of the ticket). The near-line data storage engine 132 accesses the indexing table 330 of the locater index 142 to determine that the document ID: "456" has not been archived and is located at the local database 136. In particular, the near-line table 410 (e.g., the local index 134) indicates that the document ID: "456" is located specifically at data cell {b} at the local database 136.

**Figure 5** illustrates an example database offloading process via a locater index for accessing a document from an archived database, according to embodiments of the invention. In particular, Figure 5 illustrates an example environment 500 for accessing an "archived" document (e.g., a request for a ticket/document that has been archived) from an archive storage system (e.g., archive database 158). For example, a document request (e.g., document request 115) is initiated for document ID: "456" on February 3, 2021 (e.g., greater than four years of the reference date of the ticket). The near-line data storage engine 132 accesses the indexing table 330 of the locater index 142 to determine that the document ID: "456" has been archived and is located at the archive database 158 as indicated by the reference date "01_JAN_2017" in the "ObjStore" column of the indexing table 330. In particular, an object store 520 (e.g., the archive database) archives the tickets based on reference date, then document ID, thus the object store 520 indicates that the document ID: "456" is located specifically at data cell {b} of the bucket reference date "01_JAN_2017", the reference date that was included with the document request. In some implementations, the object store 520 is the archive database 158, and includes an archive index 155 that provides the location of the object (e.g., as divided into buckets by reference date in this example).

**Figure 6** illustrates an example database offloading process via a locater index for purging documents from a near-line database, according to embodiments of the invention. In particular, Figure 6 illustrates an example environment 600 for utilizing a swap table 610 for removing a data entry from the near-line table 410 (e.g., local index 134). For example, for the example illustrated in Figure 5 on February 3, 2021, the document ID: "456" was located in both the local database 136 (e.g., illustrated on the near-line table 410) and the archive database 158 (e.g., illustrated within the object store 520). Thus, for example, in order to ensure that data is not removed from the local storage before it is archived, the data may be stored at both locations until a certain period of time has passed for a validation check. Thus, on February 15, 2021, after the certain period of time has passed for the validation check, the data locater instruction set, may automatically remove the data entries from the near-line table 410 utilizing a swap table 610.

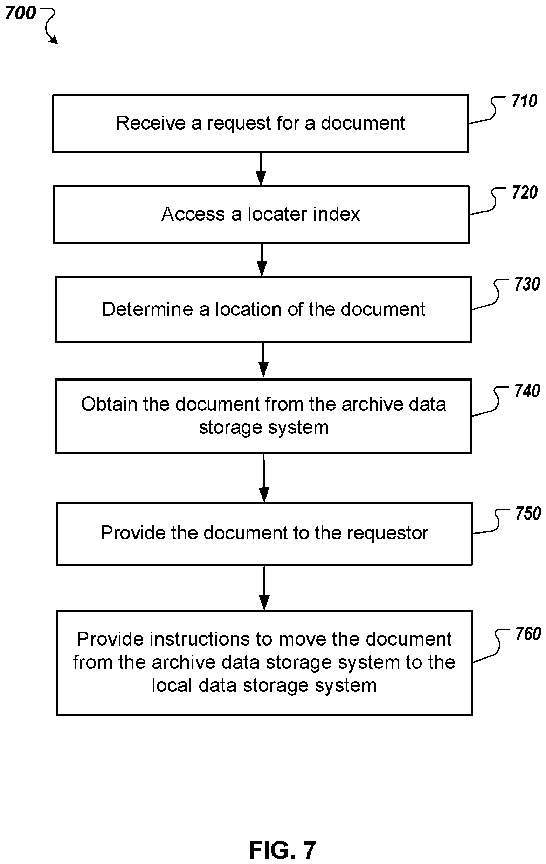

**Figure 7** illustrates a flowchart of an example process 700 for data location based on a search request for a document, according to embodiments of the invention. Operations of the process 700 can be implemented, for example, by a system that includes one or more data processing apparatus, such as one or more near-line data storage server(s) 130 of Figure 1. The process 700 can also be implemented by instructions stored on computer storage medium, where execution of the instructions by a system that includes a data processing apparatus cause the data processing apparatus to perform the operations of the process 700.

The system receives a request for a document (710). In some embodiments of the invention, a search request for a document (e.g., a ticket search request such as request 115) is received at a nearline data storage server (e.g., near-line data storage server 130) via a gateway server from a requestor. The requestor may be an airline agency, travel agency, metasearch engine, other GDS, or based on the location of the requestor. The request may include an access user identification and a reference date. For example, as illustrated in the sequence diagrams 200A and 200B of Figures 2A and 2B, respectively, a client device 110 initiates a data locater protocol by communicating a document request to one of the near-line data storage server(s) 130 via the gateway server(s) 120.

The system accesses a locater index (720). In some embodiments of the invention, a locater index may be accessed based on the request to determine a location of the document. In some embodiments of the invention, the locater index includes a locater table (e.g., locater table 330) that indicates locations of documents in a plurality of database systems that includes an archive data storage system and a local data storage system. For example, as illustrated in Figure 3-6, locator table 330 (also referred to herein as indexing table 330), indicates the storage locations for each document.

The system determines a location of the document (730). In some embodiments of the invention, the location of the document is determined to be archived as an object (e.g., aggregated tickets and stored in specific buckets per vendor) in an object store in the archive data storage system. For example, aggregated objects stored in an object store, each object including a subset of a plurality of tickets based on a reference date or a reference identification (ID). In some embodiments of the invention, there may be one object per type, such as a reference date, and each object stored in a bucket per category (e.g., per airline), so each bucket would include objects for each day (e.g., 365 days a year). For example, as illustrated in Figure 5, the object store 520 includes a bucket separated by a reference date. However, the archive system may include a plurality of object stores separated by categories, such as an object store per customer (e.g., per airline). Thus, the archive index 155 or the locater index 142 may include the designation of which object store to search within, then find the object location based on the secondary identification (e.g., reference date).

The system obtains the document from the archive data storage system (740). In some embodiments of the invention, the system obtains the document (e.g., the ticket, and all iterations associated with the ticket) by providing instructions to the archive data storage system to locate the object in the object store based on a header identification. For example, as illustrated in Figure 5, the near-line data storage engine 132 accesses the indexing table 330 of the locater index 142 to determine that the document ID: "456" has been archived and is located at the archive database 158 (e.g., object store 520) as indicated by the reference date "01_JAN_2017" in the "ObjStore" column of the indexing table 330.

In some embodiments of the invention, the indexing table 330 of the locater index 142 directs the server (e.g., near-line data storage engine 132) to access the object/bucket that contains the requested ticket via a header in the object store (e.g., per document ID and/or reference date). Additionally, the object pointed may include a redirection table (e.g., archive index 155) to enable the final target of the data placement in the object.

In some embodiments of the invention, the object store includes a plurality of documents that are aggregated and stored as an object data unit. For example, the system can enable the final target of the data placement in the object based on a redirection table.

The system provides the document to the requestor (750). For example, as illustrated in sequence diagram 200A of Figure 2A, the data archiving server(s) 150, at block 252, retrieves the requested document(s), and sends the requested document(s) to the device 110 via the near-line data storage server 130 and the gateway server(s) 120.

The system provides instructions to move the document from the archive data storage system to the local data storage system (760). For example, based on customization and storage protocols, after a document has been access from the archive database 158, the data locater instruction set 140 can then request the data be pulled back into the "live" database (e.g., local database 136) and optionally removed from the archive database 158. For example, in use, block 260 provides an example of an archived document that would be copied back into the live database after an initial purge to improve read-write efficiency (e.g., a live database being faster than archive database).

In some embodiments of the invention, the system stores the document in the locater index. For example, in some embodiments of the invention, the system can determine that the document includes frequent data access patterns based on a frequency threshold, and store the document in the locater index based on the frequent data access patterns. For example, as illustrated in Figure 3, the data locater protocols may store a copy of the requested document as document 324c at the locater index for even quicker access for the next request of document 324. Thus, there is no need to reach out to the actual storage whether it is stored in the live databased or archived, because reading the locater index 142 is enough.

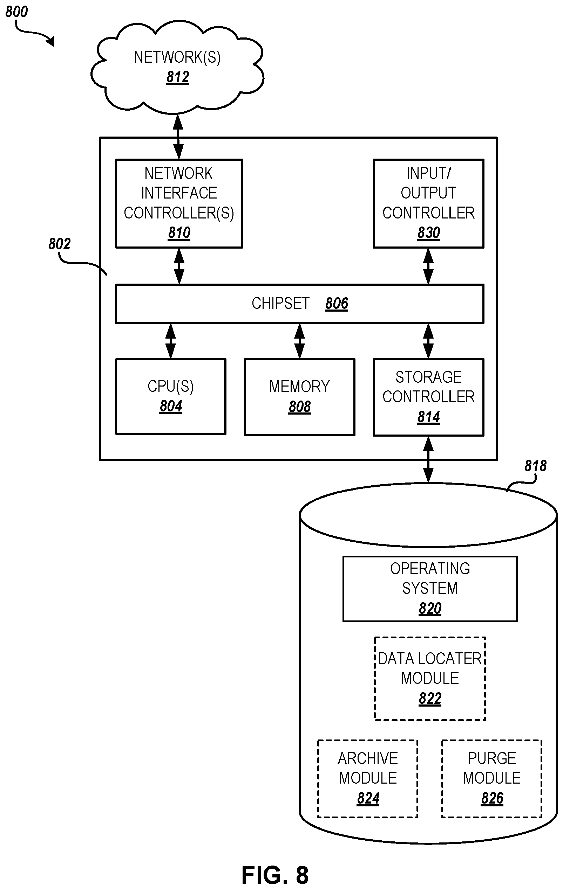

**Figure 8** illustrates an example computer architecture 800 for a computer 802 capable of executing the software components described herein for the sending/receiving and processing of tasks. The computer architecture 800 (also referred to herein as a "server") shown in Figure 8 illustrates a server computer, workstation, desktop computer, laptop, a server operating in a cloud environment, or other computing device, and may be utilized to execute any aspects of the software components presented herein described as executing on a host server, or other computing platform. The computer 802 preferably includes a baseboard, or "motherboard," which is a printed circuit board to which a multitude of components or devices may be connected by way of a system bus or other electrical communication paths. In one illustrative embodiment, one or more central processing units (CPUs) 804 operate in conjunction with a chipset 806. The CPUs 804 can be programmable processors that perform arithmetic and logical operations necessary for the operation of the computer 802.

The CPUs 804 preferably perform operations by transitioning from one discrete, physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits, including registers, adders-subtractors, arithmetic logic units, floating-point units, or the like.

The chipset 806 provides an interface between the CPUs 804 and the remainder of the components and devices on the baseboard. The chipset 806 may provide an interface to a memory 808. The memory 808 may include a random access memory (RAM) used as the main memory in the computer 802. The memory 808 may further include a computer-readable storage medium such as a read-only memory (ROM) or non-volatile RAM (NVRAM) for storing basic routines that that help to startup the computer 802 and to transfer information between the various components and devices. The ROM or NVRAM may also store other software components necessary for the operation of the computer 802 in accordance with the embodiments described herein.

According to various embodiments, the computer 802 may operate in a networked environment using logical connections to remote computing devices through one or more networks 812, a local-area network (LAN), a wide-area network (WAN), the Internet, or any other networking topology known in the art that connects the computer 802 to the devices and other remote computers. The chipset 806 includes functionality for providing network connectivity through one or more network interface controllers (NICs) 810, such as a gigabit Ethernet adapter. For example, the NIC 810 may be capable of connecting the computer 802 to other computer devices in the utility provider's systems. It should be appreciated that any number of NICs 810 may be present in the computer 802, connecting the computer to other types of networks and remote computer systems beyond those described herein.

The computer 802 may be connected to at least one mass storage device 818 that provides non-volatile storage for the computer 802. The mass storage device 818 may store system programs, application programs, other program modules, and data, which are described in greater detail herein. The mass storage device 818 may be connected to the computer 802 through a storage controller 814 connected to the chipset 806. The mass storage device 818 may consist of one or more physical storage units. The storage controller 814 may interface with the physical storage units through a serial attached SCSI (SAS) interface, a serial advanced technology attachment (SATA) interface, a fiber channel (FC) interface, or other standard interface for physically connecting and transferring data between computers and physical storage devices.

The computer 802 may store data on the mass storage device 818 by transforming the physical state of the physical storage units to reflect the information being stored. The specific transformation of physical state may depend on various factors, in different embodiments of the invention of this description. Examples of such factors may include, but are not limited to, the technology used to implement the physical storage units, whether the mass storage device 818 is characterized as primary or secondary storage, or the like. For example, the computer 802 may store information to the mass storage device 818 by issuing instructions through the storage controller 814 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The computer 802 may further read information from the mass storage device 818 by detecting the physical states or characteristics of one or more particular locations within the physical storage units.

The mass storage device 818 may store an operating system 820 utilized to control the operation of the computer 802. According to some embodiments, the operating system includes the LINUX operating system. According to another embodiment, the operating system includes the WINDOWS^{®} SERVER operating system from MICROSOFT Corporation of Redmond, Wash. According to further embodiments, the operating system may include the UNIX or SOLARIS operating systems. It should be appreciated that other operating systems may also be utilized. The mass storage device 818 may store other system or application programs and data utilized by the computer 802, such as data locater module 822 to perform data location via a locater index, an archive module 824 for managing archival of data for a storage system, and a purge module 826 for managing a purge process (e.g., data removal) for a storage system, according to embodiments described herein.

In some embodiments, the mass storage device 818 may be encoded with computer-executable instructions that, when loaded into the computer 802, transforms the computer 802 from being a general-purpose computing system into a special-purpose computer capable of implementing the embodiments described herein. These computer-executable instructions transform the computer 802 by specifying how the CPUs 804 transition between states, as described above. According to some embodiments, from the database offloading server(s) 160 perspective, the mass storage device 818 stores computer-executable instructions that, when executed by the computer 802, perform portions of the process 700, for implementing a data location system, as described herein. In further embodiments, the computer 802 may have access to other computer-readable storage medium in addition to or as an alternative to the mass storage device 818.

The computer 802 may also include an input/output controller 830 for receiving and processing input from a number of input devices, such as a keyboard, a mouse, a touchpad, a touch screen, an electronic stylus, or other type of input device. Similarly, the input/output controller 830 may provide output to a display device, such as a computer monitor, a flat-panel display, a digital projector, a printer, a plotter, or other type of output device. It will be appreciated that the computer 802 may not include all of the components shown in Figure 8, may include other components that are not explicitly shown in Figure 8, or may utilize an architecture completely different than that shown in Figure 8.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically includes computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A device comprising:
a non-transitory computer-readable storage medium; and
one or more processors coupled to the non-transitory computer-readable storage medium, wherein the non-transitory computer-readable storage medium comprises program instructions that, when executed by the one or more processors, cause the device to perform operations comprising:
receive, at a nearline data storage server via a gateway server, a search request for a document from a requestor;
access, based on the request, a locater index to determine a location of the document, wherein the locater index comprises a locater table that indicates locations of documents in a database system that includes an archive data storage system and a local data storage system;
determine that the location of the document is archived as an object in an object store in the archive data storage system;
obtain the document by providing commands to the archive data storage system to locate the object in the object store based on a header identification; and
provide the document to the requestor.

2. The device of claim 1, wherein the plurality of the program instructions further cause the device to perform operations comprising:
receive, at the nearline data storage server, an additional search request for another document from the requestor;
access, based on the additional search request, the locater index to determine a location of the other document;
determine that the location of the other document is in the local data storage system;
obtain the other document by providing commands to the local data storage system to locate the other document; and
provide the other document to the requestor.

3. The device of claim 1 or 2, wherein the plurality of the program instructions further cause the device to perform operations comprising:
move the document from the archive data storage system to the local data storage system.

4. The device according to one of the claims 1 to 3, wherein the plurality of the program instructions further cause the device to perform operations comprising:
store the document in the locater index.

5. The device according to one of the claims 1 to 4, wherein the plurality of the program instructions further cause the device to perform operations comprising:
determine that the document includes frequent data access patterns based on a frequency threshold; and
store the document in the locater index based on the frequent data access patterns.

6. The device according to one of the claims 1 to 5, wherein the object store comprises a plurality of documents that are aggregated and stored as an object data unit.

7. The device according to one of the claims 1 to 6, wherein the plurality of the program instructions that cause the device to perform operations comprising providing the document to the requestor comprises:
determine that the document includes one or more prior iterations; and
provide each iteration with the document.

8. The device according to one of the claims 1 to 7, wherein the locater index comprises a locater algorithm that accesses the locater table based on locater rules.

9. The device according to one of the claims 1 to 8, wherein the locater rules are customized by the requestor.

10. The device according to one of the claims 1 to 9, wherein the local data storage system comprises the locater index.

11. A method, comprising:
receiving, at a nearline data storage server via a gateway server, a search request for a document from a requestor;
accessing, based on the request, a locater index to determine a location of the document, wherein the locater index comprises a locater table that indicates locations of documents in a database system that includes an archive data storage system and a local data storage system;
determining that the location of the document is archived as an object in an object store in the archive data storage system;
obtaining the document by providing commands to the archive data storage system to locate the object in the object store based on a header identification; and
providing the document to the requestor.

12. The method of claim 11, further comprising:
moving the document from the archive data storage system to the local data storage system.

13. The method of claim 11 or 12, further comprising:
storing the document in the locater index.

14. The method according to one of the claims 11 to 13, further comprising:
determining that the document includes frequent data access patterns based on a frequency threshold, and
storing the document in the locater index based on the frequent data access patterns.

15. A non-transitory computer storage medium encoded with a computer program, the computer program comprising a plurality of program instructions that when executed by one or more processors cause the one or more processors to perform operations comprising:
receive, at a nearline data storage server via a gateway server, a search request for a document from a requestor;
access, based on the request, a locater index to determine a location of the document, wherein the locater index comprises a locater table that indicates locations of documents in a database system that includes an archive data storage system and a local data storage system;
determine that the location of the document is archived as an object in an object store in the archive data storage system;
obtain the document by providing commands to the archive data storage system to locate the object in the object store based on a header identification; and
provide the document to the requestor.
